# EUROPÄISCHE PATENTSCHRIFT

(11) **EP 3 955 511 B1**
(45) Veröffentlichungstag und Bekanntmachung des Hinweises auf die Patenterteilung: **07.06.2023**
(21) Anmeldenummer: 20191229.2
(22) Anmeldetag: 14.08.2020
(51) Int. Cl.: H04L 9/08

(54) **GESICHERTE DATENÜBERTRAGUNG INNERHALB EINES QKD-NETZWERKKNOTENS**
SECURE DATA TRANSMISSION WITHIN A QKD NETWORK NODE
TRANSFERT DE DONNÉES SÉCURISÉ DANS UN NOEUD DE RÉSEAU QKD

(43) Veröffentlichungstag der Anmeldung: 16.02.2022
(73) Patentinhaber: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Brandt & Nern Patentanwälte

(56) Entgegenhaltungen:
- EP-A1- 3 432 509
- "Use Cases;Draft ETSI GSQKD 002", ETSI DRAFT; DRAFT ETSI GSQKD 002, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. ISG - QKD, Nr. V<0.0.1>, 21. Juni 2010 (2010-06-21), Seiten 1-40, XP014242269, [gefunden am 2010-06-21]

## Beschreibung

Die Erfindung betrifft eine Lösung für eine gesicherte Übertragung von Daten, insbesondere von Quantenschlüsseln, innerhalb eines QKD-fähigen Netzwercknotens, das heißt innerhalb eines Netzwerkknotens, welcher für eine, gemeinsam mit einem Nachbarknoten nach einem QKD-Verfahren erfolgende Erzeugung gleichzeitig bei dem betreffenden Netzwerkknoten und bei seinem Nachbarknoten vorliegender quantensicherer Schlüssel ausgebildet ist. Gegenstände der Erfindung sind ein entsprechendes Verfahren und ein zu dessen Ausführung in geeigneter Weise ausgebildeter Netzwerkknoten mit einem QKD-System.

Der typische Aufbau eines QKD-Netzwerkknotens, also eines QKD-fähigen Netzwerkknotens, wird derzeit, in Vorbereitung eines zu erwartenden breiteren Einsatzes der QKD-Technik, noch in mehreren dafür zuständigen Standardisierungsgremien diskutiert. Dabei ist davon auszugehen, dass ein solcher QKD-Netzwerkknoten entsprechend einem insoweit diskutierten Aufbau über mehrere Strukturebenen verfügen wird. Im Hinblick auf eine derartige Struktur mit mehreren Ebenen ist dabei insbesondere an eine Strukturebene mit herstellerspezifischer Technik eines Herstellers der QKD-Komponenten, an eine providerspezifische Strukturebene mit gewissermaßen im Hintergrund arbeitender Technik des Betreibers des Netzwerkknotens und an eine Anwendungsebene zu denken, auf welcher der Provider (Betreiber des Netzwerkknotens) Ressourcen für den Einsatz des Netzwerkknotens und seine Einbindung innerhalb eines Netzwerks für die Datenübertragung zur Verfügung stellt.

Innerhalb der vorgenannten Strukturebenen und bei deren Zusammenwirken kommt dem Handling, also dem Management, der zum Zwecke einer quantensicheren Übertragung mittels des QKD-Systems erzeugten Quantenschlüssel eine besondere Bedeutung zu. Für dieses Schlüsselmanagement genutzte Protokolle haben dabei insbesondere die Aufgabe:
1. die sicher erzeugten QKD-Schlüssel in einem lokalen Schlüsselspeicher (Key Store) zu hinterlegen,
2. Anwendungen sichere Schlüssel zur Verschlüsselung von Nutzdaten zur Verfügung zu stellen,
3. Funktionen des Schlüssel-Forwardings (Key Forwarding) zu erbringen.

Unter Letzterem versteht man die Weiterleitung von jeweils als quantensicherer Schlüssel genutzten Zufallszahlen von einem Nachbarknoten eines die Funktion des Key Forwarding erbringenden Netzwerkknotens (Transferknoten) zu einem anderen Nachbarknoten dieses Transferknotens. Dabei soll das Schlüssel-Forwarding sicher und transparent erfolgen. Vorsorglich sei an dieser Stelle angemerkt, dass die Begriffe "Key Forwarding" und Schlüssel-Forwarding" in diesem Dokument bei der Darstellung der Erfindung begrifflich vollständig synonym verwendet werden.

Insgesamt schaffen das Schlüsselmanagement und die dafür vorgesehenen Protokolle für Anwendungen und/oder für Anwender - soweit sie Nutzer dieser Anwendungen sind - die Möglichkeit, an allen QKD-Endpunkten eines Netzwerks quantensichere Schlüssel anfordern zu können und bereitgestellt zu bekommen, welche eine symmetrische Verschlüsselung von Nutzdaten bei ihrer Übertragung zu einem beliebigen anderen QKD-Endpunkt zulassen. Entsprechende quantensichere Schlüssel werden dabei gemeinsam durch zwei in einer QKD-Beziehung stehende Netzwerkknoten im Wege eines nach einem Verfahren der Quantum Key Distribution erfolgenden Austausches erzeugt oder auch mittels dafür ausgebildeter Quantum Random Number Generators (QRNG).

QKD-Netzwerkknoten sind regelmäßig als Trusted Nodes ausgebildet, das heißt mittels spezieller Überwachungs- und Zugangstechnik gegen einen unautorisierten Zutritt sowie Zugang zu den innerhalb der Netzwerkknoten zwischen ihren Komponenten übertragenen Daten (insbesondere Quantenschlüssel) aufwendig gesichert. Die hierfür erforderliche Technik, einschließlich der einen widerrechtlichen Zugriff auf die Daten verhindernden Hardware, ist sehr kostenintensiv. Dabei gilt es, insbesondere auch den innerhalb der Netzwerkknoten zwischen einzelnen Komponenten und den schon erwähnten Strukturebenen erfolgenden Datenaustausch gut zu sichern.

Nach derzeitigem Stand gibt es Protokolle für das QKD-Schlüsselmanagement, welche durch die ETSI QKD-Arbeitsgruppe, insbesondere niedergelegt in den Standards ETSI GS 004 und ETSI GS 014, erarbeitet wurden. Demgemäß ist es vorgesehen, dass der Datenaustausch und damit auch der Austausch von Quantenschlüsseln innerhalb der QKD-Netzwerkknoten, basierend auf einer dazu angepassten Variante des bereits seit längerem bekannten SSL-Protokolls erfolgen soll. Die Verschlüsselung des Datenverkehrs erfolgt hierbei beispielsweise mittels RSA (einem Verschlüsselungsverfahren nach Rivest, Shamir und Adleman), nach Diffie-Hellman oder mittels kryptographischer Verfahren, die auf elliptischen Kurven basieren. Nach Auffassung der dafür zuständigen Gremien ist eine SSLbasierte Sicherung der innerhalb der Netzwerkknoten für den Datenaustausch verwendeten Protokolle ausreichend, da sich insbesondere das QKD-System innerhalb eines Trusted Netzwerkknotens und somit innerhalb einer speziell gesicherten Zone (Trusted Zone) befindet und hierdurch zuverlässig geschützt ist.

Allerdings ist dieser Schutz, wie bereits ausgeführt, aufwendig und teuer. Zudem könnte es unter dem Gesichtspunkt des Anwendervertrauens vorteilhaft sein, wenn die innerhalb eines Netzwerkknotens ausgetauschten Daten und Schlüssel auch für den Provider, als dem Betreiber des Netzwerkknotens und für dessen Mitarbeiter nicht zugänglich sind. Insoweit könnte aber davon auszugehen sein, dass vor diesem Hintergrund, mit Blick auf die sich entwickelnde Quantencomputertechnik, ein mittels SSL geschützter Datenaustausch innerhalb von QKD-Netzwerkknoten in der Zukunft möglicherweise nicht mehr als sicher anzusehen ist.

Aufgabe der Erfindung ist es, eine alternative Lösung für den Datenverkehr, insbesondere für den Schlüsselaustausch, innerhalb von QKD-fähigen Netzwercknoten anzugeben, welche den zuvor diskutierten Aspekten Rechnung trägt. Hierzu sind ein Verfahren anzugeben und ein zur Durchführung des Verfahrens geeigneter Netzwerkknoten bereitzustellen.

Die Aufgabe wird durch ein Verfahren mit den Merkmalen des Patentanspruchs 1 gelöst. Ein die Aufgabe lösender, zur Durchführung des Verfahrens geeigneter Netzwerkknoten wird durch den ersten unabhängigen Sachanspruch charakterisiert. Vorteilhafte Aus- und Weiterbildungen der Erfindung sind durch die jeweiligen Unteransprüche gegeben.

Das zur Lösung der Aufgabe vorgeschlagene Verfahren für die kryptographisch gesicherte Übertragung von Quantenschlüsseln innerhalb eines QKD-fähigen Netzwerkknotens, das heißt eines für die gemeinsame Erzeugung von Quantenschlüsseln im Wege eines Austauschs nach einem QKD-Verfahren ausgebildeten Netzwerkknotens, geht von einer Konstellation aus, bei dem ein solcher Netzwerkknoten mehrere Strukturebenen aufweist. Hierbei handelt es sich um eine Strukturebene mit insbesondere einem herstellerspezifischen Schlüsselmanagement, das heißt einem bezüglich seiner Beschaffenheit durch den Hersteller des QKD-Systems bestimmten Schlüsselmanagement (im Weiteren auch herstellerspezifische Strukturebene), um eine Strukturebene, mit insbesondere einem providerspezifischen Schlüsselmanagement, das heißt einem bezüglich seiner Beschaffenheit durch den Betreiber des Netzwerkknotens bestimmten Schlüsselmanagement, (im Weiteren auch providerspezifische Strukturebene) und um eine Anwendungsebene, welcher Quantenschlüssel für einen gesicherten, über einen der Layer (insbesondere Layer 1 bis 3) des OSI-Schichtenmodells erfolgenden Datenaustausch zur Verfügung gestellt werden.

Erfindungsgemäß werden Quantenschlüssel, die innerhalb des QKD-fähigen Netzwerkknotens von einer Strukturebene zu einer anderen übertragen werden, quantensicher verschlüsselt und unter Verwendung eines PQC-Verschlüsslungsverfahrens übertragen. Dies gilt unabhängig davon, ob ein jeweiliger Übertragungsvorgang von der Strukturebene des herstellerspezifischen Schlüsselmanagements zur Strukturebene des providerspezifischen Schlüsselmanagements oder von der Strukturebene des providerspezifischen Schlüsselmanagements zur Anwendungsebene erfolgt.

Werden also ein oder mehrere Quantenschlüssel von der Strukturebene mit dem herstellerspezifischen Schlüsselmanagement zum Zweck der Ablage in einem lokalen Schlüsselspeicher an die Strukturebene mit dem providerspezifischen Schlüsselmanagement übertragen, so wird der oder werden die Quantenschlüssel für die Übertragung an die Strukturebene des providerspezifischen Schlüsselmanagements quantensicher verschlüsselt und der Übertragungsvorgang insgesamt erfolgt unter Verwendung eines PQC-Verschlüsselungsverfahrens. Sofern andererseits ein oder mehrere Quantenschlüssel von der Strukturebene des providerspezifischen Schlüsselmanagements zum Zweck ihres Einsatzes für die Verschlüsselung von Anwendungsdaten an die Anwendungsebene übertragen werden, wird der oder werden die jeweiligen Quantenschlüssel ebenfalls quantensicher verschlüsselt, wobei außerdem der Übertragungsvorgang insgesamt unter Einsatz eines PQC-Verschlüsselungsverfahrens erfolgt.

Der Vorteil der vorgeschlagenen Verfahrensweise besteht in der Vermeidung der Offenlegung von unverschlüsselten kryptographischen Schlüsseln oder deren Artefakte in einem entsprechend ausgebildeten Trusted QKD-Netzwerkknoten. Zur Umsetzung des Verfahrens wird zwar eine Änderung des bereits standardisierten QKD Protokollstacks erforderlich. Jedoch ergibt sich der Vorteil der vollständigen Vertraulichkeit der Kommunikation unter den Elementen eines QKD-Netzwerkknotens.

Ein IT-System ist bekanntlich immer so sicher wie sein schwächstes Glied. Aus diesem Grund ist eine SSL-Verschlüsselung für quantensichere Protokolle eigentlich nicht einsetzbar. Gerade im Hinblick auf die Sicherheit nach innen, zum Beispiel auf eine Anfälligkeit gegen Manipulation durch Mitarbeiter, erhöht der Einsatz von PQC-Verschlüsselungstechnik die Systemsicherheit beträchtlich. Somit verringern sich durch den Einsatz der PQC-Verschlüsselung auch die Anforderungen an den Trusted Netzwerkknoten, also an sicherheitstechnische Einrichtung zur Realisierung einer Trusted Zone beträchtlich, was auch deutliche Einsparungen an Betriebsaufwänden bedeutet.

Der Einsatz des erfindungsgemäßen Verfahrens (und selbstverständlich die spezielle Beschaffenheit des zu seiner Durchführung geeigneten, später noch darzustellenden Netzwerkknotens) erhöht die Sicherheit der Systeme eines QKD-Netzwerkknotens und damit eines QKD-Netzwerkes substanziell. Die Vertraulichkeit der Kommunikationsstrecken zwischen den einzelnen Elementen (Komponenten/Strukturebenen) eines QKD-Netzwerkknotens ist durch die Erfindung als quantensicher einzustufen. Somit reduzieren sich die Sicherheitsanforderungen eines Trusted QKD-Nodes auf die Sicherheitsanforderungen an einzelne Komponenten, also beispielsweise an die Systemhärtung, das heißt die hardware- und/oder softwaretechnische Härtung der Komponenten oder hinsichtlich des Betriebsstopps bei einem physischen Einbruch.

Die zuvor und im Patentanspruch 1 gebrauchte Formulierung, gemäß welcher ein oder mehrere Quantenschlüssel quantensicher verschlüsselt übertragen werden und (außerdem) der Übertragungsvorgang (insgesamt) unter Verwendung eines PQC-Verschlüsselungsverfahrens erfolgt, soll dabei zum Ausdruck bringen, dass der oder insbesondere mehrere im Wege einer entsprechenden Übertragung durch eine Strukturebene einer anderen Strukturebene des Netzwerkknotens zur Verfügung gestellte Quantenschlüssel für die Übertragung selbst nicht zwingend mittels eines PQC-Verfahrens, das heißt unter Anwendung eines asymmetrischen Verschlüsselungsverfahrens verschlüsselt werden muss/müssen.

Dennoch kommt im Zuge des Übertragungsvorgangs erfindungsgemäß auf jeden Fall ein PQC-Verschlüsselungsverfahren zum Einsatz. So ist es gemäß einer möglichen Ausgestaltung des erfindungsgemäßen Verfahrens vorgesehen, dass mehrere Quantenschlüssel und zugehörige, jeweils einen Schlüssel eindeutig identifizierende Identifier von der einen Strukturebene an die andere Strukturebene symmetrisch verschlüsselt übertragen werden, wobei die Quantenschlüssel und deren Identifier verschlüsselt werden mittels eines aus dem Bestand der die Quantenschlüssel und die zugehörigen Identifier an die andere Strukturebene aussendenden Strukturebene stammenden Quantenschlüssels. Für die symmetrische Verschlüsselung kann ein robustes Protokoll, wie AES 256, verwendet werden (AES = Advanced Encryption Standard).

Der vorstehend angesprochene, für die symmetrische Verschlüsselung verwendete Quantenschlüssel wird dabei zuvor zwischen den beiden Strukturebenen als Shared Secret, nämlich als gemeinsames Geheimnis, nach einem PQC-Key-Encapsulation-Verfahren ausgetauscht. Das heißt, der oder die aufgrund einer entsprechenden Anforderung an eine Strukturebene übertragene(n) Quantenschlüssel wird/werden selbst nicht unter Einsatz eines PQC-Verfahrens, sondern vielmehr symmetrisch verschlüsselt übertragen, wobei aber im Zuge des entsprechenden Übertragungsvorgangs insgesamt dennoch insoweit ein PQC-Verschlüsselungsverfahren zum Einsatz gelangt, als der für die symmetrische Verschlüsselung verwendete Quantenschlüssel als Shared Secret durch PQC-Key-Encapsulation zwischen den involvierten Strukturebenen des Netzwerkknotens ausgetauscht wird.

Gleichwohl können aber selbstverständlich - in Abhängigkeit von der jeweiligen Implementierung des Verfahrens - auch einzelne oder mehrere Quantenschlüssel für die Übertragung zwischen Strukturebenen unmittelbar unter Nutzung eines PQC-Verfahrens verschlüsselt werden. Auch in diesem Falle ist von einer quantensicher verschlüsselten Übertragung der Quantenschlüssel von einer Strukturebene zur anderen auszugehen. Zwar ist bislang nur für die QKD-Systeme selbst der Beweis erbracht worden, dass eine mittels ihrer erfolgende Verschlüsselung theoretisch nicht zu brechen ist. Jedenfalls ist aber für PQC-Systeme, ungeachtet des Fehlens eines expliziten Beweises für ihre Festigkeit gegenüber Angriffen mit Quantencomputern, noch nicht der Beweis des Gegenteiligen erbracht worden, also dafür, dass sie möglicherweise mittels eines klassischen Algorithmus oder eines Quantenalgorithmus gebrochen werden könnten, so dass derartige Systeme - Stand jetzt - als quantensicher angesehen werden.

An dieser Stelle sei noch darauf hingewiesen, das im Kontext der Darstellung der Erfindung und ihrer in den Patenansprüchen beanspruchten Ausprägungen im Zusammenhang mit einer Übertragung von Quantenschlüsseln - sei es innerhalb eines Netzwerkknotens oder zwischen Netzwerkknoten - immer davon ausgegangen wird, dass im Zuge eines entsprechenden Übertragungsvorgangs zusammen mit den Quantenschlüsseln diese jeweils eindeutig identifizierende Identifier (ID's) mit übertragen werden (jedenfalls soweit nicht lediglich ein einzelner Schlüssel nach Abruf mittels seiner ID übertragen wird), auch wenn dies nicht ausdrücklich erwähnt wird. Typischerweise werden darüber hinaus auch im Zusammenhang mit der Erzeugung der Quantenschlüssel erstellte Zeitstempel -jedoch bei der Beschreibung und Beanspruchung der Erfindung ebenfalls nicht ausdrücklich erwähnt - mit übertragen. Letztere werden genutzt im Zusammenhang mit einer üblicherweise für die Quantenschlüssel festgelegten maximalen Gültigkeitsdauer.

Das Verfahren ist vorzugsweise dadurch weitergebildet, dass die Übertragung des oder der Quantenschlüssel von der einen Strukturebene an die andere Strukturebene nach einem adaptiven Request-/Reply-basierten Client-Server-Protokoll erfolgt. Unter Einsatz einer analog zu REST (REpresentational State Transfer) gestalteten Schnittstelle wird gemäß diesem Protokoll der mindestens eine von einer Quantenschlüssel benötigenden Strukturebene angeforderte Quantenschlüssel durch diese Strukturebene mittels eines "Get"-Kommandos bei der den mindestens einen Quantenschlüssel bereitstellenden Strukturebene angefordert. Durch die den mindestens einen Quantenschlüssel bereitstellende Strukturebene werden bei Eingang eines entsprechenden "Get"-Kommandos die das PQC-Verschlüsselungsverfahren einbeziehenden Verschlüsselungsvorgänge initiiert und durch deren Anwendung der mindestens eine angeforderte Quantenschlüssel an die andere (an die anfordernde) Strukturebene übertragen. Außerdem werden an die anfordernde Strukturebene übertragene Quantenschlüssel durch die diese Quantenschlüssel bereitstellende und übertragende Strukturebene aus ihrem eigenen Bestand gelöscht.

Der Vorteil besteht hierbei darin, dass der Austausch der Quantenschlüssel zwischen den Strukturebenen nach einem standardisierbaren Protokoll erfolgt, welches insbesondere hinsichtlich der verwendeten Kommandos eine einfache Struktur aufweist und hierbei eng an bereits bekannte und etablierte Protokolle angelehnt ist. Demgemäß können auch die dafür im Übergangsbereich zwischen den Strukturebenen des QKD-fähigen Netzwerkknotens benötigten Schnittstellen in Anlehnung an insoweit, beispielsweise von REST, bekannte Schnittstellenstandards definiert werden. Im Rahmen der in diesem Zusammenhang angesprochenen Client-Server-Struktur stellt eine Strukturebene, welche Quantenschlüssel von einer anderen Strukturebene anfordert, jeweils einen Client dar, wohingegen die den oder die Quantenschlüssel bereitstellende Strukturebene als Server fungiert.

Entsprechend einer besonders vorteilhaften Ausgestaltung des Verfahrens authentifizieren sich die die Quantenschlüssel entsprechend dem erfindungsgemäßen Verfahren austauschenden Strukturebenen untereinander, indem sie zumindest im Zuge der Einleitung eines entsprechenden Übertragungsvorgangs ausgetauschte Daten oder Nachrichten mittels eines PQC-Signierverfahrens signieren. Im Hinblick auf die zuvor nochmals angesprochene Client-Server-Struktur authentifiziert sich insbesondere der jeweilige Server mittels einer PQC-Signatur gegenüber dem Client. Hierdurch kann beispielsweise der Client, das heißt können die Komponenten der empfangenden Strukturebene "sicher sein", dass ihm/ihnen nicht vermeintlich quantensichere Schlüssel durch einen Angreifer untergeschoben werden, sondern dass diese tatsächlich von dem Server, das heißt von den Komponenten der zu ihrer Bereitstellung vorgesehenen Strukturebene des Netzwerkknotens stammen.

Klarstellend ist an dieser Stelle allerdings anzumerken, dass im Zuge einer praktischen Umsetzung der Erfindung im Zusammenhang mit der Verwendung eines PQC-Verschlüsselungsverfahrens bei der Übertragung von Quantenschlüsseln zwischen den Strukturebenen eines erfindungsgemäßen QKD-Netzwerkknotens regelmäßig immer auch eine Authentifizierung der die Schlüssel austauschenden Einheiten/Komponenten untereinander durch den Einsatz eines PQC-Signaturverfahrens erfolgen wird. Dies gilt zumal eine solche Authentifizierung in den Ablauf bekannter PQC-Verschlüsselungsverfahren typischerweise ohnehin mit einbezogen wird. Im Hinblick auf die Schaffung maximaler Sicherheit und eines maximalen Vertrauens in die Schlüssel sowie in die Sicherstellung der Vertraulichkeit mittels ihrer verschlüsselter Daten erscheint dies auch geboten.

Eine spezielle Umsetzung des Verfahrens bezieht sich intermediäre Netzwercknoten, das heißt auf QKD-fähige Transferknoten, welche als intermediärer Netzwerkknoten in einem Netzwerk zwischen zwei anderen Netzwerkknoten angeordnet sind und Quantenschlüssel von einem ihm benachbarten Netzwercknoten an einen anderen benachbarten Netzwerkknoten weiterleitet (Key Forwarding). Hierbei ist es vorgesehen, dass die in Bezug auf die Übertragungsrichtung des oder der weiterzuleitenden Quantenschlüssel eingangsseitig angeordneten Komponenten eines solchen Transferknotens den oder die Quantenschlüssel an die ausgangsseitigen Komponenten desselben Transferknotens ebenfalls entsprechend dem Grundprinzip der Erfindung, nämlich quantensicher verschlüsselt und unter Verwendung eines PQC-Verschlüsselungsverfahrens, übertragen.

Bei einem die Aufgabe lösenden, zur Durchführung des erfindungsgemäßen Verfahrens geeigneten Netzwerkknoten handelt es sich um einen QKD-fähigen Netzwerkknoten, also um einen Netzwerkknoten, welcher über die erforderlichen Komponenten für eine gemeinsam mit einem Nachbarknoten nach einem QKD-Verfahren erfolgende Erzeugung, gleichzeitig bei ihm selbst und bei dem Nachbarknoten vorliegender quantensicherer Schlüssel, verfügt. Dieser Netzwerkknoten weist mehrere Strukturebenen auf, nämlich:
- eine herstellerspezifische Strukturebene, das heißt eine Strukturebene mit Komponenten, deren Beschaffenheit durch den Hersteller des QKD-Systems bestimmt ist, wobei nur dieser die Möglichkeit hat, Änderungen an der Konfiguration dieser Komponenten vorzunehmen, welche insbesondere einen QKD-Server mit einem Schlüsselspeicher und ein zugehöriges herstellerspezifisches Schlüsselmanagement umfassen,
- eine providerspezifische Strukturebene, das heißt eine Strukturebene, innerhalb welcher die Beschaffenheit der diese Strukturebene ausbildenden Hard- und Softwarekomponenten ausschließlich durch den Provider, respektive den Betreiber des Netzwerkknotens, bestimmt wird, wobei es sich bei diesen Komponenten insbesondere um einen lokalen Schlüsselspeicher und ein zugehöriges providerspezifisches Schlüsselmanagement handelt,
- eine Anwendungsebene, nämlich eine Strukturebene, welcher Quantenschlüssel für einen gesicherten, über einen der Layer des OSI-Schichtenmodells (insbesondere Layer 1 bis 3) erfolgenden Datenaustausch zur Verfügung gestellt werden.

Was die Frage des Zugriffs auf die durch das QKD-System erzeugten Quantenschlüssel innerhalb des Netzwerkknotens anbelangt, so sei an dieser Stelle lediglich angemerkt, dass die durch das QKD-System erzeugten Quantenschlüssel durch die herstellerspezifische Strukturebene mit dem herstellerspezifischen Schlüsselmanagement der providerspezifischen Strukturebene zur Ablage in dem lokalen, durch den Provider, mittels des poviderspezifischen Schlüsselmanagements verwalteten Speicher zur Verfügung gestellt werden. Letztere, also die providerspezifische Strukturebene, stellt dann ihrerseits, je nach Bedarf, der Anwendungsebene Quantenschlüssel zur Verschlüsselung des Datenverkehrs auf Anwendungsebene zur Verfügung, wobei die an dieser Stelle gebrauchte Begrifflichkeit "Anwendungsebene" nicht mit dem Application Layer (Layer 7) des OSI-Schichtenmodels gleichzusetzen ist.

Der erfindungsgemäße Netzwerkknoten ist dabei so ausgebildet, dass alle vorgenannten Strukturebenen zur quantensicheren Verschlüsselung zwischen ihnen übertragener Quantenschlüssel ausgebildet sind. Ferner weist jede dieser Strukturebenen mindestens einen PQC-Server für eine vorzugsweise Authentifizierungsvorgänge einschließende Verschlüsselung von Daten nach einem PQC-Verschlüsselungsverfahren auf.

Entsprechend einer möglichen Ausbildungsform des erfindungsgemäßen Netzwerkknotens ist dieser dazu ausgebildet, als intermediärer Netzwerkknoten zu fungieren, das heißt als ein Netzwerkknoten, welcher in einem Netzwerk als Transferknoten mindestens einen Quantenschlüssel von einem ihm in dem Netzwerk benachbarten Netzwerkknoten an einen anderen, ihm ebenfalls benachbarten Netzwerkknoten weiterleitet. Ein solcher Transferknoten oder auch intermediärer Knoten ist erfindungsgemäß dadurch weitergebildet, dass die in Bezug auf die Übertragungsrichtung des mindestens einen weiterzuleitenden Quantenschlüssels eingangsseitigen Komponenten dieses Transferknotens sowie dessen ausgangsseitige Komponenten derart beschaffen sind, dass sie, ebenso wie dies zwischen den Strukturebenen der Fall ist, untereinander weiterzuleitende Quantenschlüssel quantensicher verschlüsselt und unter Verwendung eines PQC-Verschlüsselungsverfahrens (vorzugsweise ebenfalls unter Einbeziehung von Authentifizierungsvorgängen) übertragen.

Die vorgestellte Erfindung nutzt die Standards und Verfahren, die in den jeweiligen nationalen und internationalen Standardisierungsgremien erarbeitet werden. Diese sind:
- National Standardization (NIST, IEEE)
- European Standardization (ETSI ISG QKD, ETSI TC Cyber WG QSC)
- International Standardization (ISO /IEC, ITU, Quantum Internet Proposed Research Group, Crypto Forum Focus Group)

Die Integration von QKD-Netzen, insbesondere von lokalen Netzen, wie beispielsweise Metro-Netzen, mit PQC-Netzwerkbrücken über 5G, Fiber oder Satellitenverbindungen unter Nutzung klassischer Satelliten wird in diesen Gremien allerdings bisher wohl noch nicht diskutiert.

### Technische Realisierung

- QKD Systeme werden bereits auf dem Markt von verschiedenen Herstellern angeboten.
- Verschlüsseler werden passend zu den QKD-Systemen angeboten.
- Key Store Systeme werden ebenfalls von verschiedenen Herstellern angeboten.
- Key Management Systeme werden von den QKD-Anbietern passend zu ihren Systemen angeboten. Ein anbieterunabhängiges, providerspezifisches Key Management ist abhängig von den laufenden Standardisierungsbemühungen und zurzeit noch nicht erhältlich.
- PQC-Signatur- und Verschlüsselungsalgorithmen sind in Form von "open source Bibliotheken" verfügbar. Diese Bibliotheken bedürfen einer Adaption und eine Neukompilation von openssl, der zurzeit gängigsten Krypto-Bibliothek. Die Verfahren haben einen für die Forschung (insbesondere die angewandte Forschung) und Entwicklung verwendbaren Stand, jedoch liegt eine Marktreife noch nicht vor.
- AES 256 zur quantensicheren Verschlüsselung der Nutzdaten ist standardisiert und Teil gängiger Programmierumgebungen.
- PQ-PKI (Public Key Infrastrukturen) zum Enrollment und zur Verifikation von hybriden PQ-Zertifikaten liegen als Test Implementierungen und Internetservices vor (PQ = Post Quantum).
- Die Bereitstellung von Internetverbindungen über Socket-Protokolle oder REST-Services sind Programmierstandard.

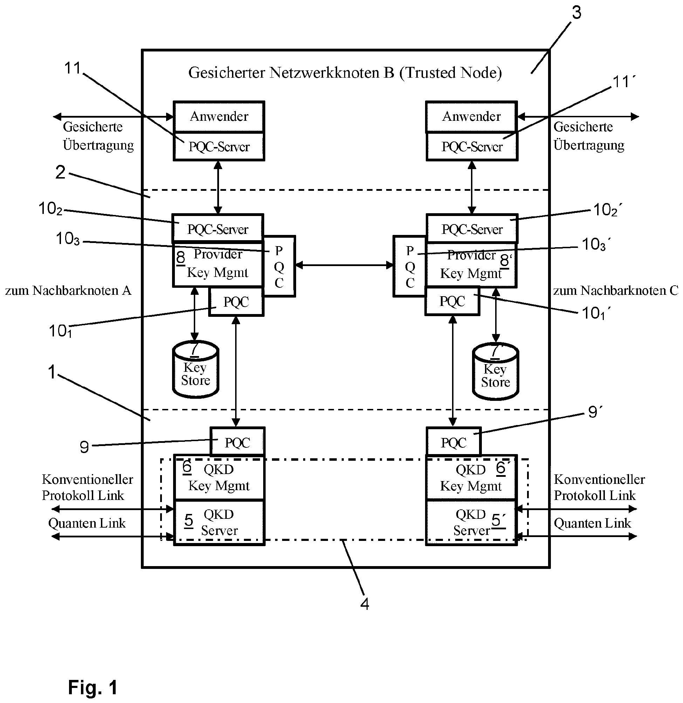

Anhand der Fig. 1 sollen nachfolgend ein Ausführungsbeispiel der Erfindung gegeben und deren wesentliche Aspekte nochmals erläutert werden.

Die Fig. 1 zeigt eine grobschematische Darstellung einer möglichen Ausbildungsform eines erfindungsgemäßen Netzwerkknotens. Bei dem gezeigten Beispiel handelt es sich um einen Netzwerkknoten, welcher für das Schlüssel-Forwarding, das heißt dazu ausgebildet ist, als Transferknoten (intermediärer Netzwerkknoten) Quantenschlüssel von einem ihm benachbarten Netzwerkknoten an einen anderen, ihm ebenfalls benachbarten Netzwerkknoten weiterzuleiten. Demgemäß umfasst das in der herstellerspezifischen Strukturebene 1 angesiedelte QKD-System 4 (mindestens) zwei QKD-Server 5; 5' (mit einem nicht dargestellten Schlüsselspeicher) und je ein herstellerspezifisches Schlüsselmanagement 6; 6' je QKD-Server 5, 5'. Hierüber steht der hier betrachtete Netzwerkknoten in einer QKD-Beziehung zu beispielsweise zwei ihm benachbarten (nicht gezeigten) anderen Netzwerkknoten, zwischen denen er als intermediärer Netzwerkknoten angeordnet ist. Wie bereits ausgeführt, sind die QKD-Server 5, 5' mit jeweils zugehörigem herstellerspezifischem Schlüsselmanagement 6, 6' in einer erste Strukturebene 1 des Netzwerkknotens angesiedelt, über die gewissermaßen ausschließlich der Hersteller des QKD-Systems 4 die Gewalt hat.

Die einzelnen Strukturebenen 1, 2, 3 des Netzwerkknotens sind in der Fig. 1 durch gestrichelte Linien darstellungsmäßig voneinander getrennt. Insoweit oberhalb der zuvor besprochenen herstellerspezifischen Strukturebene 1 ist die providerspezifische Strukturebene 2 mit einem Schlüsselspeicher 7, 7' und mit einem providerspezifischen Schlüsselmanagement 8, 8' ausgebildet, wobei die vorgenannten Komponenten im Hinblick auf die von dem Netzwerkknoten zur Verfügung gestellte Funktionalität des Schlüssel-Forwardings doppelt - wie in der Zeichnung dargestellt - oder mehrfach ausgebildet sein können. Eine je nach Übertragungsrichtung eines oder mehrerer im Wege des Key Forwarding weiterzuleitender Quantenschlüssel als Eingang anzusehende Seite des Netzwerkknotens überträgt auf der providerspezifischen Strukturebene 2 die weiterzuleitenden Schlüssel an die Ausgangsseite erfindungsgemäß in quantensicher verschlüsselter Form und unter Verwendung eines PQC-Verschlüsselungsverfahrens, wofür ebenfalls entsprechende PQC-Server 10₃; 10₃' (in der Zeichnung, verkürzend, teilweise nur mit PQC bezeichnet) vorgesehen sind.

Durch die providerspezifische Strukturebene 2 werden, wie bereits ausgeführt, der in der Darstellung darüberliegenden Anwendungsebene 3 bei Bedarf Quantenschlüssel aus dem lokalen Schlüsselspeicher 7, 7' auf Vermittlung durch das providerspezifische Schlüsselmanagement 8, 8' zur quantensicheren Verschlüsslung von auf einem der Layer 1 bis 3 des OSI-Schichtenmodells übertragenen Daten zur Verfügung gestellt. Die Strukturebenen 1, 2, 3 sind zur Anwendung des PQC-Verfahrens im Zuge der verschlüsselten Übertragung zwischen ihnen zu übertragender Quantenschlüssel jeweils mit PQC-Servern 9; 9'; 10₁, 10₁', 10₂; 10₂' ausgestattet.

Was das bereits angesprochene, sich analog zu REST ausgebildeter Schnittstellen bedienende Request-/Reply-basierte Client-Server-Protokoll anbelangt, so umfasst dieses insbesondere folgende Kommandos, bei deren Gebrauch die einzelnen Strukturebenen des QKD-Netzwerkknotens jeweils folgende Rollen einnehmen:

| API | Client | Server |
|---|---|---|
| Get_Key | Anwendungsebene (Applikation) | Providerspezifische Strukturebene mit zugehörigem Schlüsselmanagement |
| Get_Key_by_ID | | |
| Get_Keys | Providerspezifische Strukturebene mit zugehörigem Schlüsselmanagement | Herstellerspezifische Strukturebene mit zugehörigem Schlüsselmanagement des QKD-Hersteller |

Die Programmierschnittstellen zwischen der Anwendungsebene (Applikation) und der Strukturebene mit dem providerspezifischen Schlüsselmanagement sollen hierbei analog zum definierten ETSI Standard QKD 014 funktionieren. Demgemäß kann sich beispielsweise bei einer ohne Einbeziehung eines intermediären Netzwerkknotens direkt zwischen zwei Netzwerkknoten erfolgenden Übertragung eines Quantenschlüssel folgender Ablauf gestalten.

Eine Applikation eines QKD-Netzwerkknotens A fordert einen Quantenschlüssel zur Verschlüsselung von Nachrichten mit einer Applikation auf einem QKD-Netzwerkknoten B an. Die Applikation des Netzwerkknotens A kommuniziert mit dessen Schlüsselmanagement, das heißt mit dem providerspezifischen, Quantenschlüssel in einem lokalen Speicher (Key Store) verwaltenden Schlüsselmanagement:
1. Get_Key: Das (providerspezifische) Schlüsselmanagement des Netzwercknotens A sucht einen Quantenschlüssel und die dazu gehörende Schlüssel-ID aus dem lokalen Key Speicher. Die Applikation des Netzwerkknotens A speichert den Schlüssel und schickt eine Anfrage an die Anwendungsebene (Applikation) im Netzwerkknoten B unter Aussendung der Schlüssel-ID des von ihrem eigenen Schlüsselmanagement (providerspezifisches Schlüsselmanagement des Netzwerkknotens A) bereitgestellten Quantenschlüssels.
2. Get_Key_by_ID (Schlüssel-ID): Das (providerspezifische) Schlüsselmanagement des Netzwerkknotens B sucht den Quantenschlüssel mit der passenden Schlüssel-ID aus dem lokalen Schlüsselspeicher (Key Store) des QKD-Netzwerkknotens B. Die Applikation von B meldet der Applikation von A, dass die Kommunikation aufgenommen werden kann.
3. Der gelieferte Quantenschlüssel wird nach Verwendung als "benutzt" markiert und danach aus dem Schlüsselspeicher gelöscht.

Eine analoge Logik mit einem analogen Ablauf soll zwischen der Strukturebene mit dem providerspezifischen Schlüsselmanagement und der Strukturebene mit dem herstellerspezifischen Schlüsselmanagement implementiert werden. In diesem, nicht standardisierten Fall schickt das providerspezifische Schlüsselmanagement einen Request an das herstellerspezifische Schlüsselmanagement:
1. Get_Keys: Das herstellerspezifische Schlüsselmanagement liefert dann alle bis zu diesem Zeitpunkt erzeugten Schlüssel mit den Nachbarknoten, zum Beispiel auch Schlüssel-Identifier und Zeitstempel an das providerspezifische Schlüsselmanagement. Letzteres speichert die Information sofort in dem Schlüssel Speicher des Trusted QKD Netzwerkknotens.
2. Alle an die Strukturebene mit dem providerspezifischen Schlüsselmanagement übertragenen Schlüssel, die noch in den Systemen der Strukturebene mit dem herstellerspezifischen Schlüsselmanagement gespeichert sind, werden nach Abschluss des Vorgangs gelöscht.

Beide Programmierschnittstellen liefern eine Statusfunktion, so dass der aktuelle Status der Schlüsselmanagement-Server abgefragt werden kann. Logging und Monitoring Funktionen sollen vorzugsweise ebenfalls implementiert sein.

Beide Parteien, also die vorgenannten Netzwerkknoten A und B haben dann dasselbe Shared Secret, welches für die Verschlüsselung von Nutzdaten, hier Listen von quantensicheren Schlüsseln, deren Identifier und Zeitstempel, über ein robustes Protokoll, wie AES 256, verwendet werden kann. Die verschlüsselten Daten werden dann über die zuvor beschriebenen REST APIs übermittelt.

Alle Server authentifizieren sich vorzugsweise entsprechend der Erfindung über quantensichere Mechanismen. Dazu werden "post quantum" Signatur Protokolle verwendet. In diesem Falle werden private und öffentliche Schlüssel mit PQC-Methoden auf den Servern erzeugt und eine bekannte Nachricht mit dem privaten Schlüssel des Senders signiert. Nach dem Empfang kann der Empfänger mit dem öffentlichen Schlüssel des Senders die Signatur überprüfen und die Identität des Senders verifizieren.

Die Sicherheit der vorgestellten erfindungsgemäßen Lösung hängt direkt von der Sicherheit der jeweils verwendeten kryptografischen Verfahren ab.

Die theoretische Sicherheit des Quantenschlüsselaustausches ist bewiesen und hängt maßgeblich von der Gültigkeit der Gesetze der Quantenmechanik ab, während die praktische Sicherheit abhängig von der technischen Implementierung des QKD-Systems und der Möglichkeiten von technischen Side Channels ist. Die PQC-Systeme werden zurzeit entwickelt, überprüft und unterliegen aufwändigen Standardisierungsbemühungen. Obwohl es keinen Beweis ihrer absoluten Sicherheit gibt, gelten die Algorithmen aufgrund geltender Annahmen und Kenntnisse über Algorithmen eines Quantencomputers als sicher, zumal bisher kein Gegenbeweis erbracht werden konnte.

Die beschriebene Erfindung erhöht die Sicherheit der Systeme eines QKD-Netzwerkknotens und eines QKD-Netzwerkes substantiell. Die die Vertraulichkeit der Kommunikationsstrecken zwischen den einzelnen Elementen eines QKD Netzwerkknotens und vorzugsweise (respektive bei der praktischen Umsetzung wohl regelmäßig) deren Authentizität ist durch die Erfindung als quantensicher einzustufen. Somit reduzieren sich die Sicherheitsanforderungen eines Trusted QKD-Nodes (QKD-Netzwerkknotens) auf die Sicherheitsanforderungen der einzelnen Komponenten, beispielsweise Systemhärtung oder Betriebsstopp bei einem physischen Einbruch.

### Verfügbare Post Quantum Verschlüsselungsverfahren

'BIKE1-L1-CPA', 'BIKE1-L3-CPA', 'BIKE1-L1-FO', 'BIKE1-L3-FO', 'Kyber512', 'Kyber768', 'Kyber1024', 'Kyber512-90s', 'Kyber768-90s', 'Kyber1024-90s', 'LEDAcryptKEM-LT12', 'LEDAcryptKEM-LT32', 'LEDAcryptKEM-LT52', 'NewHope-512-CCA', 'NewHope-1024-CCA', 'NTRU-HPS-2048-509', 'NTRU-HPS-2048-677', 'NTRU-HPS-4096-821', 'NTRU-HRSS-701', 'LightSaber-KEM', 'Saber-KEM', 'FireSaber-KEM', 'BabyBear', 'BabyBearEphem', 'MamaBear', 'MamaBearEphem', 'PapaBear', 'PapaBearEphem', ,FrodoKEM-640-AES', 'FrodoKEM-640-SHAKE', 'FrodoKEM-976-AES', 'FrodoKEM-976-SHAKE', 'FrodoKEM-1344-AES', 'FrodoKEM-1344-SHAKE', 'SIDH-p434', 'SIDH-p503', 'SIDH-p610', ,SIDH-p751', 'SIDH-p434-compressed', 'SIDH-p503-compressed', 'SIDH-p610-compressed', 'SIDH-p751-compressed', 'SIKE-p434', 'SIKE-p503', 'SIKE-p610', 'SIKE-p751', 'SIKE-p434-compressed', 'SIKE-p503-compressed', 'SIKE-p610-compressed', 'SIKE-p751-compressed'.

### Verfügbare Post Quantum Signaturverfahren:

'DILITHIUM_2', 'DILITHIUM_3', 'DILITHIUM_4', 'MQDSS-31-48', MQDSS-31-64', SPHINCS+-Haraka-128f-robust', SPHINCS+-Haraka-128f-simple', 'SPHINCS+-Haraka-128s-robust', 'SPHINCS+-Haraka-128s-simple', 'SPHINCS+-Haraka-192f-robust', 'SPHINCS+-Haraka-192f-simple', 'SPHINCS+-Haraka-192s-robust', 'SPHINCS+-Haraka-192s-simple', 'SPHINCS+-Haraka-256f-robust', 'SPHINCS+-Haraka-256f-simple', 'SPHINCS+-Haraka-256s-robust', 'SPHINCS+-Haraka-256s-simple', 'SPHINCS+-SHA256-128f-robust', ,SPHINCS+-SHA256-128f-simple', 'SPHINCS+-SHA256-128s-robust', 'SPHINCS+-SHA256-128s-simple', 'SPHINCS+-SHA256-192f-robust', 'SPHINCS+-SHA256-192f-simple', 'SPHINCS+-SHA256-192s-robust', 'SPHINCS+-SHA256-192s-simple', 'SPHINCS+-SHA256-256f-robust', 'SPHINCS+-SHA256-256f-simple', 'SPHINCS+-SHA256-256s-robust', 'SPHINCS+-SHA256-256s-simple', 'SPHINCS+-SHAKE256-128f-robust', 'SPHINCS+-SHAKE256-128f-simple', 'SPHINCS+-SHAKE256-128s-robust', 'SPHINCS+-SHAKE256-128s-simple', 'SPHINCS+-SHAKE256-192f-robust', 'SPHINCS+-SHAKE256-192f-simple', 'SPHINCS+-SHAKE256-192s-robust', 'SPHINCS+-SHAKE256-192s-simple', 'SPHINCS+-SHAKE256-256f-robust', 'SPHINCS+-SHAKE256-256f-simple', 'SPHINCS+-SHAKE256-256s-robust', 'SPHINCS+-SHAKE256-256s-simple',m 'picnic L1_FS', 'picnic_L1_UR', 'picnic_L3_FS', 'picnic_L3_UR', 'picnic_L5_FS', 'picnic_L5_UR', 'picnic2_L1_FS', 'picnic2_L3_FS', 'picnic2_L5_FS', 'qTesla-p-I', 'qTesla-p-III'

## Patentansprüche

1. Verfahren für eine kryptographisch gesicherte Übertragung von Quantenschlüsseln zwischen Strukturebenen (1, 2, 3) und Komponenten innerhalb eines QKD-fähigen Netzwerkknotens, das heißt innerhalb eines Netzwerkknotens, welcher mit einem, für eine gemeinsam mit einem Nachbarknoten nach einem QKD-Verfahren erfolgende Erzeugung, gleichzeitig bei ihm selbst und bei dem Nachbarknoten vorliegender quantensicherer Schlüssel ausgebildeten QKD-System (4) ausgestattet ist und mehrere Strukturebenen (1, 2, 3) aufweist, mit
- einer Strukturebene (1) eines herstellerspezifischen Schlüsselmanagements, das heißt eines bezüglich seiner Beschaffenheit durch den Hersteller des QKD-Systems bestimmten Schlüsselmanagements (6; 6'),
- einer Strukturebene (2) eines providerspezifischen Schlüsselmanagements (8; 8'), das heißt eines bezüglich seiner Beschaffenheit durch den Betreiber des Netzwerkknotens bestimmten Schlüsselmanagements und
- einer Anwendungsebene (3), welcher Quantenschlüssel für einen gesicherten, über einen der Layer des OSI-Schichtenmodells erfolgenden Datenaustausch zur Verfügung gestellt werden,
**dadurch gekennzeichnet, dass**
ein oder mehrere Quantenschlüssel innerhalb des Netzwerkknotens, nämlich von der Strukturebene (1) des herstellerspezifischen Schlüsselmanagements (6; 6') zur Ablage in einem Schlüsselspeicher (7; 7') an die Strukturebene (2) des providerspezifischen Schlüsselmanagements (8; 8') oder von der Strukturebene (2) des providerspezifischen Schlüsselmanagements (8; 8') zur Verschlüsselung von Anwendungsdaten an die Anwendungsebene (3), jeweils quantensicher verschlüsselt und unter Verwendung eines PQC-Verschlüsselungsverfahrens übertragen werden.

2. Verfahren nach Anspruch 1, **dadurch gekennzeichnet, dass** mehrere Quantenschlüssel und zugehörige, jeweils einen Schlüssel eindeutig identifizierende Identifier von der einen Strukturebene (1, 2) an die andere symmetrisch verschlüsselt übertragen werden, wobei die Quantenschlüssel und deren Identifier verschlüsselt werden mittels eines aus dem Bestand der die Quantenschlüssel und die zugehörigen Identifier an die andere Strukturebene (2, 3) aussendenden Strukturebene (1, 2) stammenden Quantenschlüssels, welcher zwischen den Strukturebenen (1, 2, 3) zuvor als Shared Secret, nämlich als gemeinsames Geheimnis, nach einem PQC-Key-Encapsulation-Verfahren ausgetauscht wurde.

3. Verfahren nach Anspruch 1 oder 2, **dadurch gekennzeichnet, dass** die Übertragung des oder der Quantenschlüssel von der einen Strukturebene (1, 2) an die andere Strukturebene (2, 3) nach einem adaptierten, Request-/Replybasierten Client-Server-Protokoll erfolgt, bei welchem die mindestens einen Quantenschlüssel benötigende Strukturebene (2, 3) den mindestens einen Quantenschlüssel bei der diesen bereitstellenden Strukturebene mittels eines "Get"-Kommandos anfordert und bei welchem die den mindestens einen Quantenschlüssel bereitstellende Strukturebene (1, 2) beim Eingang des "Get"-Kommandos die das PQC-Verschlüsselungsverfahren einbeziehenden Verschlüsselungsvorgänge initiiert, durch deren Anwendung der mindestens eine, angeforderte Quantenschlüssel an die anfordernde Strukturebene (2, 3) übertragen wird, sowie an die andere Strukturebene (2, 3) übertragene Quantenschlüssel aus ihrem eigenen Bestand löscht.

4. Verfahren nach einem der Ansprüche 1 bis 3, **dadurch gekennzeichnet, dass** bei einem intermediären Netzwerkknoten, das heißt bei einem QKD-fähigen Netzwerkknoten, welcher in einem Netzwerk als Transferknoten mindestens einen Quantenschlüssel von einem ihm in dem Netzwerk benachbarten Netzwerkknoten an einen anderen, ihm in dem Netzwerk ebenfalls benachbarten Netzwerkknoten weiterleitet, die in Bezug auf die Übertragungsrichtung des mindestens einen weiterzuleitenden Quantenschlüssels eingangsseitig angeordneten Komponenten des Transferknotens den mindestens einen Quantenschlüssel an die ausgangsseitigen Komponenten desselben Transferknotens ebenfalls quantensicher verschlüsselt und unter Verwendung eines PQC-Verschlüsselungsverfahrens übertragen.

5. Verfahren nach einem der Ansprüche 1 bis 4, **dadurch gekennzeichnet, dass** die zur Übertragung von Quantenschlüsseln unter Verwendung eines PQC-Verfahrens untereinander kommunizierenden Komponenten des Netzwercknotens sich untereinander authentifizieren, indem sie an die jeweils anderen Komponenten zu übertragende Daten oder Nachrichten nach einem PQC-Signaturverfahren signieren.

6. Netzwerkknoten, nämlich QKD-fähiger Netzwerkknoten, welcher mit einem, für eine gemeinsam mit einem Nachbarknoten nach einem QKD-Verfahren erfolgende Erzeugung, gleichzeitig bei ihm und bei dem Nachbarknoten vorliegender quantensicherer Schlüssel ausgebildeten QKD-System (4) ausgestattet ist, wobei der Netzwerkknoten aufweist
- eine Strukturebene (1) mit bezüglich ihrer Beschaffenheit durch den Hersteller des QKD-Systems (4) bestimmten Komponenten, mit mindesten einem QKD-Server (5; 5') mit einem Schlüsselspeicher und mit einem zugehörigen herstellerspezifischen Schlüsselmanagement (6; 6')und
- eine Strukturebene (2) mit bezüglich ihrer Beschaffenheit durch den Betreiber des Netzwerkknotens bestimmten Komponenten, mit einem lokalen Schlüsselspeicher (7; 7') und einem providerspezifischen Schlüsselmanagement (8; 8') und
- eine Anwendungsebene (3), nämlich eine Strukturebene, welcher Quantenschlüssel für einen gesicherten, über einen der Layer des OSI-Schichtenmodells erfolgenden Datenaustausch zur Verfügung gestellt werden,
**dadurch gekennzeichnet, dass**
die Strukturebenen (1, 2, 3) zur quantensicheren Verschlüsselung zwischen ihnen übertragener Quantenschlüssel ausgebildet sind und dass jede der Strukturebenen mindestens einen PQC-Server (9; 9', 10₁; 10₁', 10₂; 10₂', 11; 11') zur Verschlüsselung mit einer anderen Strukturebene (1, 2, 3) desselben Netzwercknotens auszutauschender Daten nach einem PQC-Verschlüsselungsverfahren aufweist.

7. Netzwerkknoten nach Anspruch 6, wobei dieser ausgebildet ist, als intermediärer Netzwerkknoten zu fungieren, nämlich als ein Netzwerkknoten, welcher in einem Netzwerk als Transferknoten mindestens einen Quantenschlüssel von einem ihm in dem Netzwerk benachbarten Netzwerknoten an einen anderen, ihm in dem Netzwerk ebenfalls benachbarten Netzwerkknoten weiterleitet, **dadurch gekennzeichnet, dass** in Bezug auf die Übertragungsrichtung des mindestens einen weiterzuleitenden Quantenschlüssels eingangsseitige und ausgangsseitige, jeweils einen PQC-Server (10₂; 10₂') umfassende Komponenten des Transferknotens dazu ausgebildet sind, den mindestens einen weiterzuleitenden Quantenschlüssel untereinander quantensicher verschlüsselt und unter Verwendung eines PQC-Verschlüsselungsverfahrens zu übertragen.

## Claims

1. Method for cryptographically secure transmission of quantum keys between structure levels (1, 2, 3) and components within a QKD-enabled network node, that is to say within a network node that is equipped with a QKD system (4) designed to generate, together with a neighbour node in accordance with a QKD method, simultaneously in said node and in the neighbour node, existing quantum-secure keys and has multiple structure levels (1, 2, 3), having
- a structure level (1) of a manufacturer-specific key management, that is to say a key management (6; 6') defined in terms of its properties by the manufacturer of the QKD system,
- a structure level (2) of a provider-specific key management (8, 8'), that is to say a key management defined in terms of its properties by the operator of the network node, and
- an application level (3) that makes available quantum keys for a secure data exchange taking place over one of the layers of the OSI layer model,
**characterized in that**
one or more quantum keys are transmitted within the network node, namely from the structure level (1) of the manufacturer-specific key management (6; 6') for storage in a key memory (7; 7') to the structure level (2) of the provider-specific key management (8; 8') or from the structure level (2) of the provider-specific key management (8; 8') for encryption of application data to the application level (3), in each case with quantum-secure encryption and using a PQC encryption method.

2. Method according to Claim 1, **characterized in that** multiple quantum keys and associated identifiers, each unambiguously identifying a key, are transmitted from one structure level (1, 2) to the other with symmetric encryption, wherein the quantum keys and their identifiers are encrypted by way of a quantum key originating from the inventory of the structure level (1, 2) transmitting the quantum keys and the associated identifiers to the other structure level (2, 3), which quantum key has been exchanged beforehand between the structure levels (1, 2, 3) as a shared secret in accordance with a PQC key encapsulation method.

3. Method according to Claim 1 or 2, **characterized in that** the one or more quantum keys are transmitted from one structure level (1, 2) to the other structure level (2, 3) in accordance with an adapted, request/reply-based client/server protocol, in which the structure level (2, 3) requiring at least one quantum key requests the at least one quantum key from the structure level providing it by way of a "get" command and in which the structure level (1, 2) providing the at least one quantum key, upon receiving the "get" command, initiates the encryption processes incorporating the PQC encryption method, as a result of the application of which the at least one requested quantum key is transmitted to the requesting structure level (2, 3), and erases quantum keys transmitted to the other structure level (2, 3) from its own inventory.

4. Method according to one of Claims 1 to 3, **characterized in that**, in the case of an intermediate network node, that is to say in the case of a QKD-enabled network node that, in a network as transfer node, forwards at least one quantum key from a network node adjacent thereto in the network to another network node likewise adjacent thereto in the network, the components of the transfer node that are arranged on the input side in relation to the transmission direction of the at least one quantum key to be forwarded likewise transmit the at least one quantum key to the output-side components of the same transfer node with quantum-secure encryption and using a PQC encryption method.

5. Method according to one of Claims 1 to 4, **characterized in that** the components of the network node communicating with one another in order to transmit quantum keys using a PQC method authenticate one another by signing data or messages to be transmitted to the respective other components in accordance with a PQC signature method.

6. Network node, namely QKD-enabled network node, which is equipped with a QKD system (4) designed to generate, together with a neighbour node in accordance with a QKD method, simultaneously in said node and in the neighbour node, existing quantum-secure keys, wherein the network node has
- a structure level (1) with components defined in terms of their properties by the manufacturer of the QKD system (4), with at least one QKD server (5; 5') with a key memory and with an associated manufacturer-specific key management (6; 6') and
- a structure level (2) with components defined in terms of their properties by the operator of the network node, with a local key memory (7; 7') and a provider-specific key management (8; 8') and
- an application level (3), namely a structure level that makes available quantum keys for a secure data exchange taking place over one of the layers of the OSI layer model,
**characterized in that**
the structure levels (1, 2, 3) are designed for quantum-secure encryption between their transmitted quantum keys and that each of the structure levels has at least one PQC server (9; 9', 10₁; 10₁'; 10₂; 10₂'; 11; 11') for encrypting data to be exchanged with another structure level (1, 2, 3) of the same network node in accordance with a PQC encryption method.

7. Network node according to Claim 6, wherein said network node is designed to operate as an intermediate network node, namely as a network node that, in a network as transfer node, forwards at least one quantum key from a network node adjacent thereto in the network to another network node likewise adjacent thereto in the network, **characterized in that** input-side and output-side components of the transfer node in relation to the transmission direction of the at least one quantum key to be forwarded, each comprising a PQC server (10₂; 10₂'), are designed to transmit the at least one quantum key to be forwarded among one another with quantum-secure encryption and using a PQC encryption method.

## Revendications

1. Procédé de transmission avec sécurisation cryptographique de clés quantiques entre des planes de structure (1, 2, 3) et des composants à l'intérieur d'un noeud de réseau compatible QKD, c'est-à-dire à l'intérieur d'un noeud de réseau qui est équipé d'un système QKD (4) configuré pour une génération effectuée en commun avec un noeud voisin selon un procédé QKD d'une clé à sécurité quantique présente simultanément chez lui et chez le noeud voisin et possède plusieurs plans de structure (1, 2, 3), comprenant
- un plan de structure (1) d'une gestion de clés spécifique au fabricant, c'est-à-dire une gestion de clés (6 ; 6') déterminée par le fabricant du système QKD pour ce qui concerne sa nature,
- un plan de structure (2) d'une gestion de clés spécifique au fournisseur (8 ; 8'), c'est-à-dire une gestion de clés déterminée par l'opérateur du noeud de réseau pour ce qui concerne sa nature et
- un plan d'application (3) auquel sont mises à disposition des clés quantiques pour un échange de données sécurisé réalisé par le biais de l'une des couches du modèle de couches OSI,
**caractérisé en ce que**
une ou plusieurs clés quantiques sont transmises à l'intérieur du noeud de réseau, à savoir du plan de structure (1) de la gestion de clés spécifique au fabricant (6 ; 6') pour le stockage dans une mémoire de clés (7 ; 7') au plan de structure (2) de la gestion de clés spécifique au fournisseur (8 ; 8') ou du plan de structure (2) de la gestion de clés spécifique au fournisseur (8 ; 8') pour le cryptage de données d'application au plan d'application (3), respectivement cryptées avec sécurité quantique et en utilisant un procédé de cryptage PQC.

2. Procédé selon la revendication 1, **caractérisé en ce que** plusieurs clés quantiques et des identificateurs associés, qui identifient à chaque fois de manière univoque une clé, sont transmis d'un plan de structure (1, 2) à l'autre avec un cryptage symétrique, les clés quantiques et leurs identificateurs étant cryptés au moyen d'une clé quantique issue de l'inventaire du plan de structure (1, 2) émettant la clé quantique et l'identificateur associé à l'autre plan de structure (2, 3), laquelle a été échangée précédemment entre les plans de structure (1, 2, 3) en tant que Shared Secret, à savoir en tant que secret partagé, selon un procédé d'encapsulation de clé PQC.

3. Procédé selon la revendication 1 ou 2, **caractérisé en ce que** la transmission de la ou des clés quantiques dudit plan de structure (1, 2) à l'autre plan de structure (2, 3) s'effectue selon un protocole client-serveur basé sur la demande/réponse, avec lequel le plan de structure (2, 3) qui nécessite au moins une clé quantique demande l'au moins une clé quantique auprès du plan de structure qui fournit celle-ci au moyen d'une commande « Get » et avec lequel le plan de structure (1, 2) qui fournit au moins une clé quantique, lors de l'entrée de la commande « Get », initie les opérations de cryptage impliquant le procédé de cryptage de clé PQC, par l'application desquelles l'au moins une clé quantique demandée est transmise au plan de structure (2, 3) demandeur, et aussi efface de son propre inventaire la clé quantique transmise à l'autre plan de structure (2, 3).

4. Procédé selon l'une des revendications 1 à 3, **caractérisé en ce que** dans le cas d'un noeud de réseau intermédiaire, c'est-à-dire dans le cas d'un noeud de réseau compatible QKD qui, en tant que noeud de transfert dans un réseau, retransmet au moins une clé quantique d'un noeud de réseau qui lui est voisin dans le réseau à un autre noeud de réseau qui lui est également voisin dans le réseau, les composants du noeud de transfert disposés du côté de l'entrée en référence à la direction de transmission de l'au moins une clé quantique à retransmettre transmettent l'au moins une clé quantique aux composants du côté de la sortie du même noeud de réseau également cryptée avec sécurité quantique et en utilisant un procédé de cryptage PQC.

5. Procédé selon l'une des revendications 1 à 4, **caractérisé en ce que** les composants du noeud de réseau qui communiquent entre eux pour la transmission de clés quantiques en utilisant un procédé PQC s'authentifient entre eux en signant les données ou les messages à transmettre aux autres composants respectifs selon un procédé de signature PQC.

6. Noeud de réseau, à savoir noeud de réseau compatible QKD, lequel est équipé d'un système QKD (4) configuré pour une génération effectuée en commun avec un noeud voisin selon un procédé QKD d'une clé à sécurité quantique présente simultanément chez lui et chez le noeud voisin, le noeud de réseau comprenant
- un plan de structure (1) comprenant des composants déterminés, pour ce qui concerne leur nature, par le fabricant du système QKD (4), comprenant au moins un serveur QKD (5 ; 5') pourvu d'une mémoire de clés et pourvu d'une gestion de clés spécifique au fabricant (6 ; 6') associée et
- un plan de structure (2) comprenant des composants déterminés, pour ce qui concerne leur nature, par l'opérateur du noeud de réseau, comprenant une mémoire de clés locale (7 ; 7') et une gestion de clés spécifique au fournisseur (8 ; 8') et
- un plan d'application (3), à savoir un plan de structure auquel sont mises à disposition des clés quantiques pour un échange de données sécurisé réalisé par le biais de l'une des couches du modèle de couches OSI,
**caractérisé en ce que**
les plans de structure (1, 2, 3) sont configurés pour le cryptage avec sécurité quantique des clés quantiques transmises entre eux et **en ce que** chacun des plans de structure possède au moins un serveur PQC (9 ; 9', 10₁ ; 10₁', 10₂ ; 10₂', 11 ; 11') pour le cryptage des données à échanger avec un autre plan de structure (1, 2, 3) du même noeud de réseau selon un procédé de cryptage PQC.

7. Noeud de réseau selon la revendication 6, celui-ci étant configuré pour faire office de noeud intermédiaire, à savoir de noeud intermédiaire qui, en tant que noeud de transfert dans un réseau, retransmet au moins une clé quantique d'un noeud de réseau qui lui est voisin dans le réseau à un autre noeud de réseau qui lui est également voisin dans le réseau, **caractérisé en ce que** les composants du noeud de transfert, comportant respectivement un serveur PQC (10₂; 10₂',), disposés du côté de l'entrée et du côté de la sortie en référence à la direction de transmission de l'au moins une clé quantique à retransmettre, sont configurés pour transmettre l'au moins une clé quantique à retransmettre entre eux cryptée avec sécurité quantique et en utilisant un procédé de cryptage PQC.
